# EUROPEAN PATENT APPLICATION

(11) **EP 4 586 187 A1**
(43) Date of publication of application: **16.07.2025**
(21) Application number: 24151706.9
(22) Date of filing: 12.01.2024
(51) Int. Cl.: G06T 7/00

(54) **METHOD AND SYSTEM FOR AUTOMATED CHARACTERISATION OF MATERIAL DEFECTS THROUGH AN IMAGE OF THE MATERIAL**

(71) Applicant: VALEO SYSTEMES THERMIQUES, 78320 Le Mesnil Saint-Denis (FR)
(72) Inventor: ANAND, Nagarapu, 600130 Chennai (IN); KRISHNAMOORTHY, Murali, 600130 Chennai (IN); GINOUX, Geoffroy, 78322 Le Mesnil-Saint-Denis Cedex (FR); COEUILLE, Frederique, 78322 Le Mesnil-Saint-Denis Cedex (FR); VIVET, Laurent, 78322 Le Mesnil-Saint-Denis Cedex (FR); RAVICHANDRAN, Balaji, 600130 Chennai (IN)
(74) Representative: Valeo Systèmes Thermiques

(57) **Abstract**

The present disclosure relates to a method for automated characterisation of defects in an image of a material. In particular, it relates to an automated method for identifying and characterizing one or more defects of a material from an image of the material obtained using imaging modalities used, for example, during quality control or defective material analysis in an automotive product manufacturing process.

## Description

### FIELD OF DISCLOSURE

The present disclosure relates to a method for automated characterisation of defects in an image of a material. In particular, it relates to an automated method for identifying and characterizing one or more defects of a material from an image of the material obtained using imaging modalities used, for example, during quality control in an automotive product manufacturing process.

### BACKGROUND

Quality control and defective material analysis are a critical step in an automotive product manufacturing process. As part of the quality control, materials used in the manufacturing process are inspected for defects. Conventionally, samples of the material to be inspected are imaged using a suitable imaging modality (for example, an optical microscope or a Scanning Electron Microscope) to identify defects. However, manual identification and classification of the different defects is highly time consuming and also prone to human errors.

There is therefore a need for a more efficient and robust method for identification and characterization of defects in a material from an image of the material.

### SUMMARY OF INVENTION

The present invention relates to using an artificial intelligence AI model for identifying and classifying defects in an image of a material. The present invention aims to provide an efficient and robust automated method for identifying and classifying defects in an image of a material - in particular, it aims to provide an improved method for identifying and characterizing specific type of defects in an image of a material which include a ductile defect, a brittle defect and a fatigue defect, which are defects in materials used in the automotive process. Preferably, the network used in the AI model is a CNN.

According to a first aspect of the invention, a computer-implemented method for identifying and characterizing one or more defects of a material from an image of the material is provided, the method comprising: obtaining an image of the material; inputting the image to an artificial intelligence model; the artificial intelligence model being trained to identify and to characterize in a material a ductile defect, a brittle defect and a fatigue defect; the trained artificial intelligence model configured to create a feature map that identifies the presence of one or more features in the material from the image of the material, and characterize the one or more features as being one of a ductile defect, a brittle defect or a fatigue defect based on the feature map.

According to an optional feature of the invention, the input of the artificial intelligence model may further comprise the type of material, the artificial intelligence model being trained for the type of material. The type of material may be one of: a metal; a polymer; a ceramic; or a glass.

According to an optional feature of the invention, the method may further comprise a step of segmenting the image into a plurality of regions. The segmentation step may consist of a semantic segmentation.

According to an optional feature of the invention, the trained artificial intelligence model may comprise a plurality of processing layers which are sequentially executed to create the feature map and/or characterize the one or more features.

According to an optional feature of the invention, the plurality of processing layers may comprise at least one convolutional layer.

According to an optional feature of the invention, the plurality of processing layers may comprise at least one pooling layer.

According to an optional feature of the invention, at least one processing layer may extract one or more features on the image to create the feature map based on the extracted features. The extracted feature may be an edge and/or curve and/or orientation of the image and/or colours in the image.

According to an optional feature of the invention, the plurality of processing layers may comprise a first sequence of processing layers including at least one processing layer and a second sequence of processing layers including at least one processing layer, the first sequence of processing layers implementing the creation of the feature map, and the second sequence of processing layers implementing the characterization of the at least one defect of the material based on the feature map.

According to an optional feature of the invention in which the first sequence of processing layers includes a first processing layer, at least one intermediate processing layer and a final processing layer, the method may further comprise: the image being inputted in the first processing layer, and the first processing layer configured to create at least one first feature sub-map, the at least one first feature sub-map being inputted in an intermediate processing layer, the intermediate processing layer creating at least one intermediate feature sub-map, the at least one intermediate feature sub-map being inputted in the final processing layer, the final processing layer creating the feature map.

According to an optional feature of the invention, a processing layer of the first sequence may create a feature sub-map for at least one region.

According to an optional feature of the invention, the first processing layer may create a feature sub-map for each region of the image.

According to an optional feature of the invention, the first processing layer of the first sequence may be a convolutional layer.

According to an optional feature of the invention, at least one processing layer of the first sequence may create an intermediate image, the created intermediate image being used as an input in the next processing layer.

According to an optional feature of the invention, the second sequence may include at least one fully connected layer, the at least one fully connected layer being configured to perform the step of characterizing a defect of the material based on the feature map.

According to an optional feature of the invention, the characterisation of the defect of the material may further comprise a probability of the defect being one of a ductile defect, a brittle defect and a fatigue defect.

According to an optional feature of the invention, the feature map may comprise a multi-dimensional array of numerical values representing the features extracted.

According to an optional feature of the invention, the trained artificial intelligence model may comprise a deep neural network, in particular, a convolutional neural network.

According to an optional feature of the invention, the image of the material may be a microscopic image of the material.

According to a second aspect of the invention, a computer-implemented method for training an artificial intelligence model is provided for use in identifying, and characterizing, one or more defects of a material from an image of the material, the method comprising the step of: obtaining training data; the training data including a plurality of image samples of materials, each image sample comprising an information characterizing a defect on the material present in the image sample, inputting training data to an artificial intelligence model; training the artificial intelligence model to identify and characterize one or more defects of a material from one or more images of the training data, each of the one or more defects being one of: a ductile defect, a brittle defect and a fatigue defect.

According to an optional feature of the invention, the training may comprise the creation of a feature map for each image sample that identifies the presence of one or more features in the material from the image of the material, and the characterization of at least one defect of the material based on the feature map and the information characterizing the defect on the material present in the image sample.

According to an optional feature of the invention, the training data may further include for each image sample the type of material. The type of material may be one of: a metal; a polymer; a ceramic; or a glass.

According to an optional feature of the invention, for each image sample, the training may further comprise a step of segmenting the image into a plurality of regions.

According to an optional feature of the invention, the segmentation step may consist of a semantic segmentation.

According to an optional feature of the invention, the artificial intelligence model to be trained may comprise a plurality of processing layers which are sequentially executed to create the feature map.

According to an optional feature of the invention, the plurality of processing layers may comprise at least one convolutional layer.

According to an optional feature of the invention, the plurality of processing layers may comprise at least one pooling layer.

According to an optional feature of the invention, for each image sample, at least one processing layer may extract one or more features on the image sample to create a feature map that identifies the presence of one or more features in the material from the image sample based on the extracted features.

According to an optional feature of the invention, the extracted feature may be an edge and/or curve and/or orientation of the image sample and/or colours in the image sample.

According to an optional feature of the invention, the plurality of processing layers may comprise a first sequence of processing layers including at least one processing layer and a second sequence of processing layers including at least one processing layer, the first sequence of processing layers implementing the creation of the feature map, and the second sequence of processing layers implementing the characterization of the at least one defect of the material based on the feature map and the information characterizing a defect on the material present in the image sample.

According to an optional feature of the invention, in which the first sequence of processing layers includes a first processing layer, at least one intermediate processing layer and a final processing layer, the method may further comprise, for each image simple: the image sample being inputted in the first processing layer, and the first processing layer configured to create at least one first feature sub-map, the at least one first feature sub-map being inputted in an intermediate processing layer, the intermediate processing layer creating at least one intermediate feature sub-map, the at least one intermediate feature sub-map being inputted in the final processing layer, the final processing layer creating the feature map.

According to an optional feature of the invention, a processing layer of the first sequence may create a feature sub-map for at least one region.

According to an optional feature of the invention, the first processing layer may create a feature sub-map for each region of the image sample.

According to an optional feature of the invention, the first processing layer of the first sequence may be a convolutional layer.

According to an optional feature of the invention, at least one processing layer of the first sequence may create an intermediate image, the created intermediate image sample being used as an input in the next processing layer.

According to an optional feature of the invention, the second sequence may include at least one fully connected layer, the at least one fully connected layer being configured to perform the step of characterizing a defect of the material based on the feature map and the information characterizing a defect on the material present in the image sample.

According to an optional feature of the invention, the feature map may comprise a multi-dimensional array of numerical values representing the features extracted.

According to an optional feature of the invention, the artificial intelligence model to be trained may comprise a deep neural network, in particular, a convolutional neural network.

According to an optional feature of the invention, the image sample of the material may be a microscopic image of the material.

According to an optional feature of the invention, the artificial intelligence model has been trained according to the method of the first aspect of the invention described above.

According to a third aspect of the invention, a data-processing system comprises means for carrying out the method according to the first aspect of the invention or the method according to the second aspect of the invention described above.

According to a fourth aspect of the invention, a computer program has instructions which when executed cause a computing device or system to perform a method according to the first aspect of the invention or the second aspect of the invention described above.

According to a fifth aspect of the invention, an artificial intelligence model is provided for use in identifying and characterizing one or more defects of a material from an image having been obtained according to a method of the first aspect of the invention or the second aspect of the invention described above.

Further features and aspects of the disclosure are provided in the appended claims.

### BRIEF DESCRIPTION OF THE DRAWINGS

The present disclosure will now be described by way of example only with reference to the accompanying drawings in which:
Figure 1 shows a flow-chart of a method for identifying and characterizing one or more defects of a material from an image of the material, according to an embodiment of the present disclosure.
Figure 2 illustrates a global view of an architecture of the model according to an embodiment of the invention.
Figure 3 shows one embodiment of the invention where the AI model implements a CNN having a ResNet architecture.
Figures 4(a)-(d) illustrate a specific embodiment in which the input image is inputting to an AI model, and each processing layer of the first sequence creates an intermediate image.
Figures 5(a)-(f) shows an example of images at different channels of Convx_1 and Convx_2 layers for an input image of a fatigue defect.
Figures 6(a)-(c) show an example of microscope images of brittle, fatigue and ductile defects in a plastic and a metal.
Figures 7(a)-(f) show an example of microscope images of distinct characteristics required to be detected for brittle defect in a plastic and metal surface.
Figure 8(a)-(e) show examples of elongation of material which is a characteristic indicating the presence of a ductile defect in a plastic and metal surface.
Figure 9(a)-(e) show examples of microscope images of distinct characteristics indicating the presence of a fatigue defect in a plastic and metal surface.
Figure 10 shows a flow-chart of a method for training an artificial model for use in identifying and characterizing one or more defects of a material from an image of the material.
Figure 11 shows the evolution of the loss function relative to the number of epoch for training and for validation of the ResNet model according to an embodiment of this disclosure.
Figure 12 shows the precision and recall values for the different types of defects as result of testing a ResNet model according to an embodiment of this disclosure.
Figure 13 shows a block diagram of an example computing system integrating an AI model according to an embodiment of this disclosure.

### DETAILED DESCRIPTION

The present invention relates to using an AI model for identifying and classifying defects in an image of a material. The present invention aims to provide an efficient and robust automated method for identifying and classifying defects in an image of a material - in particular, it aims to provide an improved method for identifying and characterizing specific type of defects in an image of a material which include a ductile defect, a brittle defect and a fatigue defect. Preferably, the network used in the AI model is a CNN.

The present disclosure relates to a computer-implemented method for identifying and characterizing one or more defects of a material from an image of the material is provided, the method comprising: obtaining an image of the material; inputting the image to an artificial intelligence model; the artificial intelligence model being trained to identify and to characterize in a material a ductile defect, a brittle defect and a fatigue defect; the trained artificial intelligence model configured to create a feature map that identifies the presence of one or more features in the material from the image of the material, and characterize the one or more features as being one of a ductile defect, a brittle defect or a fatigue defect based on the feature map.

The present disclosure also provides a computer-implemented method for training an artificial intelligence model for use in identifying, and characterizing, one or more defects of a material from an image of the material, the method comprising the step of obtaining training data, the training data including a plurality of image samples of materials, each image sample comprising an information characterizing a defect on the material present in the image sample, inputting training data to an artificial intelligence model, training the artificial intelligence model to identify and characterize one or more defects of a material from one or more images of the training data, each of the one or more defects being one of: a ductile defect, a brittle defect and a fatigue defect.

Such types of defects are well defined and understood in materials science.

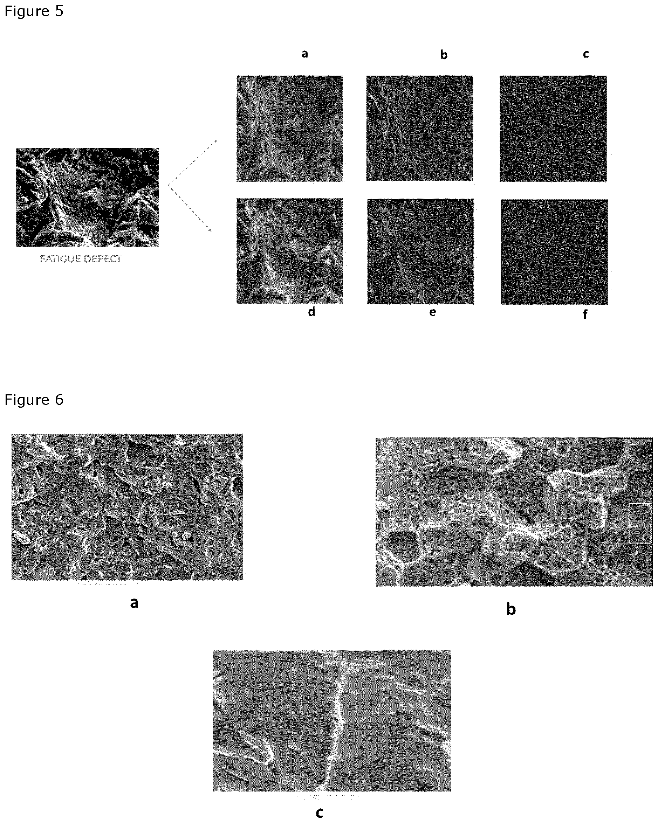

As utilized herein, the term "defect" refers to any type of rupture in a material. The term "defect" comprises at least "a ductile defect", "a brittle defect" and "a fatigue defect". The defect or rupture in the material can be detected and captured as an image using an imaging modality suitable for quality control in an automotive product manufacturing process. The imaging modality may be, for example, an optical microscope, a scanning electron microscope, an atomic force microscope or a transmission electron microscope. Figures 6(a)-(c) of this description, which will be described later on, provide example images obtained using a scanning electron microscope of the different types of defects. The material may be any type of material used in an automotive manufacturing process.

For example, the type of material may be metal, polymer (plastic, elastomer, composite, etc.), ceramic or glass.

As utilized herein, the term "artificial intelligence (AI) model" refers to any suitable AI model implementing a type of deep neural network (DNN). In some embodiments, the type of DNN used is a convolutional neural network (CNN). A CNN is a type of DNN which can be used in pattern and image recognition. As is known a CNN comprises one or more convolution layers for identifying features in images by performing a convolution operation between one or more filters and an image input into the layer to generate a feature map. Preferably, a pooling layer in a CNN is used to decrease the size of the convolved feature map to reduce computational costs. A CNN may further comprise a fully connected layer which connects each of the neurons in a first layer to each of the neurons in a second layer and can be used to predict the label to describe the image.

In some embodiments, the type of CNN used is Residual Neural Network (ResNet). Each layer in a ResNet architecture may comprise one or more residual blocks where each residual block comprises a set of operations to be performed on an image input into the said layer.

As utilized herein, the term "filter" is defined with as a means to extract features from an input image in a convolutional layer of a CNN. A filter is a multi-dimensional matrix of weights where the weights have a spatial relationship with each other. The weights used in the filter are in turn derived during the training process (detailed later in the description), where the trained weights are data patterns or rules extracted from the training images used to train the AI model. A filter may also be referred to as a kernel. A filter or kernel size is the width x height of the filter matrix. In some embodiments of the present invention, the AI model implements a CNN having at least one convolutional layer with at least one filter where the filter is a two-dimensional matrix. In some other embodiments, the filter can be a three-dimensional matrix (for example, where the image is also a three-dimensional matrix, with height, width and depth with the depth corresponding to colour channels).

As utilized herein, the term "feature map" is a multi-dimensional array of numerical values that represents the learned features from an input image. These numerical values represent the various patterns in the input image which can be edges, curves and any other patterns. In an embodiment where AI model implements a CNN, a convolution operation is performed between the filter and the input image - that is, the filter slides across the entire input image generating a map of features for each image as a result of the convolution operation. Feature maps in CNNs are a means to extract useful features from an input image to learn the patterns within the image with respect to different classes.

As utilized herein, the term "stride" refers to a parameter of a filter in the AI model which specifies the movement of the filter over an input image. That is, the stride specifies the number of pixels a filter moves over an input image.

The term "feature sub-map" refers to a feature map output of the intermediate layers of a CNN, the intermediate layers being between the input layer and the final output layer of the CNN.

As utilized herein, the term "convolutional layer" refers to a layer in a CNN that is used to extract the various features from the input images by performing a convolution operation between at least one filter and an input image.

As utilized herein, the term "pooling layer" refers to a layer used in a CNN to implement "pooling" which is an operation to downsample or decrease the size of a convolved feature map to reduce computational costs. In some embodiments, the pooling operation is max pooling which takes the maximum value in the pooling window or average pooling which takes the average value in the pooling window.

As utilized herein, the term "fully connected layer" refers to a layer used towards the end of a CNN and which takes the output of the preceding convolutional and pooling layers in order to predicts the label to describe the input image.

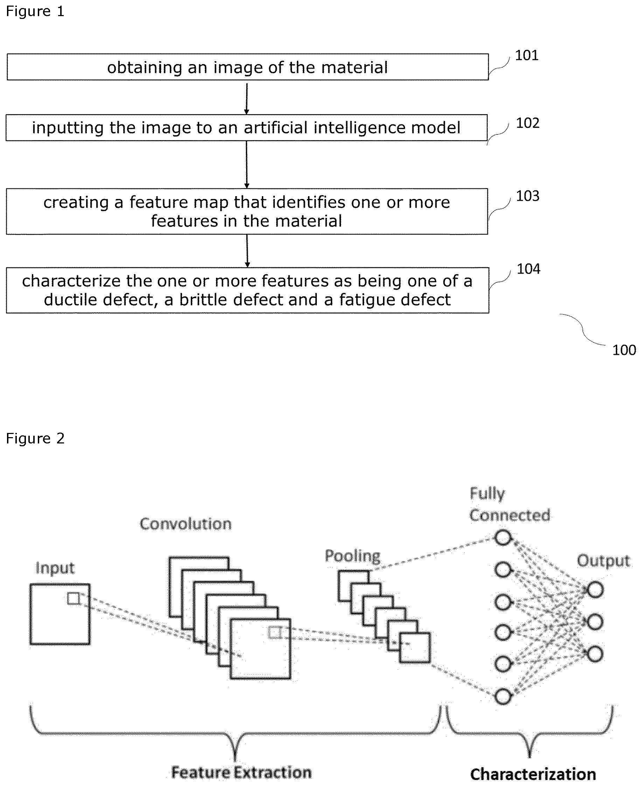

Figure 1 shows a flow-chart of a method, 100, for identifying and characterizing one or more defects of a material from an image of the material, according to an embodiment of the present disclosure.

The individual steps of the process, and the system required to implement the process, are described in more detail below.

In step 101, an image of the material is obtained using an imaging modality. For example, where the material is used in an automotive manufacturing process, an image is obtained using a suitable imaging modality for quality control checks such as an optical microscope, SEM, etc. Any suitable form of image capture may be used.

In step 102 the image is input into an AI model. In one embodiment, the AI model implements a CNN - this is described in detail later in the description with respect to Table 1. Such models are preferred as they are suited to image recognition tasks, such as being able to identify defects in a material. As described below, the model is a supervised learning model, which has been trained on labelled image data. The labelled image data identifies when a defect is one of a ductile defect, a brittle defect and a fatigue defect. This labelled data is used to train the model to identify from an input image the presence of one or more a ductile defect, a brittle defect and a fatigue defect.

In step 103, a feature map is created to identify one or more features in the material. The one or more features relate to one or more type of defects such as a ductile defect, a brittle defect and a fatigue defect. The feature map, as is known in CNNs, is the output from the convolution layer which extracts features from the initial input image as received at step 101.

In step 104, the features from the feature map, as created at step 103, are characterized by the AI model as being one of a ductile defect, a brittle defect and a fatigue defect. As such this represents supervised learning where the features in the feature map are identified, using the trained model, to label the feature - if identified as such - as one of a ductile defect, a brittle defect and a fatigue defect.

Figure 2 illustrates a global view of an architecture of the model according to an embodiment of the invention on which the method described above is implemented. The architecture comprises two main levels, the first level based on processing layers to extract and identify one or more features in an input image to create a feature map and the second level characterizing one or more type of defects such as a ductile defect, a brittle defect and a fatigue defect based on the feature map.

As illustrated, the first level comprises one or more processing layers, including at least a convolutional layer, and potentially at least one pooling layer. The output of the first level is a feature map created to identify defects.

The second layer follows the first level and may comprise at least one processing layer, i.e., a fully connected layer, to characterize the defects.

The architecture of the model is discussed in more detail below.

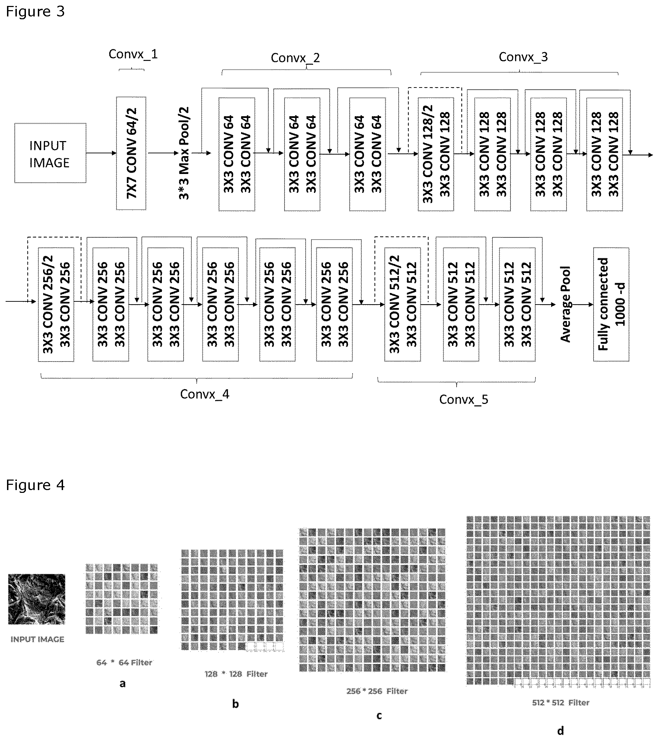

Figure 3 shows an architecture of the model, wherein the model is based on a CNN which is a Residual neural network (ResNet). Table 1 details different processing layers of the CNN having a ResNet architecture in Figure 3.

**Table 1: Architecture of an AI model implementing a CNN, according to an embodiment of this disclosure**

| Layer Name | Output Size | ResNet Architecture |
|---|---|---|
| Convx_1 | 112 x 112 | 64 Filters, Kernel Size 7x7, Stride 2 |
| Convx_2 | 56 x 56 | 3x3 Max Pooling Layer, Stride 2 |
| | | (2 layers with Kernel size 3x3 and 64 filters) x 3 |
| Convx_3 | 28 x 28 | (2 layers with kernel size 3x3 and 128 filters ) x 4 |
| Convx_4 | 14 x 14 | (2 layers with kernel size 3x3 and 256 filters ) x 6 |
| Convx_5 | 7 x 7 | (2 layers with kernel size 3 x 3 and 512 filters ) x 3 |
| | 1 x 1 | Average Pooling Layer, 1000 -d Fully connected, Softmax |
| FLOPS | | 3.6 x 10⁹ |

The AI model comprises a plurality of processing layers which are sequentially executed to create the feature map and/or characterize the one or more features.

As seen in Figure 3 and Table 1, in an embodiment the ResNet architecture used is ResNet-34 as it comprises a total of 34 layers. The different processing layers in the CNN architecture progressively extract and learn hierarchical features at different levels to classify an input image. There is a summary of the output size at each processing layer and the dimension of the filter or kernel used for convolution operation at every point in the CNN. It is noted here that after each convolution operation in a convolutional layer, a Rectified Linear Unit (ReLu) activation function is applied element-wise to the feature maps to introduce non-linearity to the network, thereby allowing it to learn more complex patterns in the image. We will now describe each of these processing layers in detail.

The network comprises a first input layer, °Convx_1" having 64 filters operating on the input image, with each filter or kernel having a size of 7x7 (width x height of kernel) with a stride of 2 to reduce spatial dimensions. The purpose of this processing layer is to extract low level features such as edges, orientation of the image, colours and/or textures. Therefore, in first input layer, there is a convolution operation between each filter as defined above and the input image providing a respective, distinct feature sub-map where each feature sub-map represents a different learned feature of the input image. The feature sub-maps are stacked together to provide the output of the said layer. As seen in Table 1, the output size of each feature map in the Convx_1 layer is 112 x 112 (width x height of feature map). In the first layer, the processing layer may include a padding process, for example of size (3,3) to preserve the spatial information and mitigate border effects.

The output of the Convx_1 layer is provided to a pooling layer where a 3x3 max pooling operation, having a stride 2, is implemented on each feature sub-map to reduce the dimensionality of that feature sub-map - that is, the described max pooling operation is performed on each feature sub-map output from the previous Convx_1 layer. This processing layer may include a padding process, for example of size (1,1).

The output of the pooling layer is then provided to the third layer, Convx_2. The Convx_2 layer, as seen in Figure 3 and Table 1, has three residual blocks, each containing two convolutional layers with 64 filters of size 3x3. The arrows in Figure 3 indicate the flow of data through the residual blocks. That is, the output of the pooling layer is provided to the first residual block having 64 filters of size 3x3 with a stride of 1 and convolution is performed similar to the manner described above with respect to the Convx_1 layer. The output or stacked feature sub-maps of the first residual block of layer Convx_2 is then provided to the second residual block to be convolved with the 64 filters of size 3x3 with a stride of 1 in the second residual block and so on. The residual blocks allow the network to learn residual mappings, which makes it easier to train the deep network and helps to learn more complex patterns and features from the input image. The skilled person looking at layer Convx_2 in Figure 3 will understand, given the ResNet architecture, that each residual block also implements a skip connection where the input at the residual block is also applied to the output of the block. The solid arrows show the skip connection and indicate that the said residual block is an identity block as the size of the input into the residual block is the same as the size of the output of the residual block. The output or feature sub-maps of the layer Convx_2 is then provided to the fourth layer Convx_3. This processing layer may include a padding process, for example of size (1,1).

As seen in Figure 3 and Table 1, the fourth layer, "Convx_3", has four residual blocks, each containing two convolutional layers with 128 filters of size 3x3 and where the first residual block uses a stride of 2 for downsampling of feature sub-maps output from the Convx_2 layer into the Convx_3 layer. The fourth layer helps the network learn more abstract features as it goes deeper into the architecture. The arrows in Figure 3 indicate the flow of data through the residual blocks. That is, the output of the Convx_2 layer is provided to the first residual block of the Convx_3 layer having 128 filters of size 3x3 with a stride of 1 and convolution is performed between each feature sub-map output from the Convx_2 layer and each filter of the Convx_3 layer. The output or feature sub-map of the first residual block of layer Convx_3 is then provided to the second residual block to be convolved with the 128 filters of size 3x3 with a stride of 1 in the second residual block and so on. The skilled person looking at layer Convx_3 in Figure 3 will understand, given the ResNet architecture, that each residual block also implements a skip connection where the input at the residual block is also applied to the output of the block. The solid arrows show the skip connection and also indicate that the said residual block is an identity block in that the size of the input into the residual block is the same as the size of the output of the residual block. The dotted arrows for skip connection (for example between the input of the first residual block of the fourth layer and the output of the first residual block of the fourth layer) indicate that the residual block is not an identity block and that there is an additional operation such as, 1x1 convolution operation or padding applied to the input in the skip connection path to make the input the same size as the output of the residual block. The output of the layer Convx_3 is then provided to the fifth layer, "Convx_4".

As seen in Figure 3 and Table 1, the fifth layer, Convx_4, has six residual blocks, each containing two convolutional layers with 256 filters of size 3x3 and where the first residual block uses a stride of 2 for downsampling of feature sub-maps output from the Convx_3 layer into the Convx_4 layer. This processing layer captures even more abstract and high-level features. The processing of the feature sub-maps in this layer is similar to the convolution operation as described above with respect to layers Convx_2 and Convx_3. That is, the arrows in Figure 3 indicate the flow of data through the residual blocks. The output of the Convx_3 layer is provided to the first residual block of the Convx_4 layer having 256 filters of size 3x3 with a stride of 1 and convolution is performed between each feature sub-map output from the Convx_3 layer and each filter of the Convx_4 layer. The output or feature sub-map of the first residual block of layer Convx_4 is then provided to the second residual block to be convolved with the 256 filters of size 3x3 with a stride of 1 in the second residual block and so on. The solid and dotted skip connections have already been defined earlier (see, for example, the corresponding description for layer Convx_3) and so this definition will not be repeated here. The output of the layer Convx_4 is then provided to the sixth layer, "Convx_5". This processing layer may include a padding process, for example of size (1,1).

As seen in Figure 3 and Table 1, the sixth layer, Convx_5, has three residual blocks, each containing two convolutional layers with 512 filters of size 3x3 and where the first residual block uses a stride of 2 for downsampling of feature sub-maps output from the Convx_4 layer into the Convx_5 layer. At this processing layer, the network can detect intricate patterns and specific object parts. The processing of the feature sub-maps in this layer is similar to the convolution operation as described above with respect to previous layers. That is, the arrows in Figure 3 indicate the flow of data through the residual blocks. The output of the Convx_4 layer is provided to the first residual block of the Convx_5 layer having 512 filters of size 3x3 and convolution is performed between each feature sub-map output from the Convx_4 layer and each filter of the Convx_5 layer with a stride of 2. The output or feature sub-map of the first residual block of layer Convx_5 is then provided to the second residual block to be convolved with the 512 filters of size 3x3 with a stride of 1 in the second residual block and so on. The solid and dotted skip connections have already been defined earlier (see, for example, the corresponding description for layer Convx_3) and so this definition will not be repeated here. This processing layer may include a padding process, for example of size (1,1).

The output of the Convx_5 layer, where each feature sub-map is of size 7x7 is then provided to a global average pooling layer. This layer reduces the spatial dimensions of the feature sub-maps output to a single value per channel (i.e., per filter) and aggregates the most important features learned by the network across the entire image, providing a compact representation. The important features refer to the features that the network has learned to be relevant for classifying a defect. It could include specific patterns, textures, or structures that are indicative of certain characteristics or objects in the image.

In some embodiments, before the image is inputting to the AI model, the input image may be segmented into a plurality of regions. The segmentation step may consist of a semantic segmentation. The image segmentation may be used to characterize the defects when the image has more than one defect.

These different processing layers (Convx_1 Convx_2, Convx_3, Convx_4, Convx_5 and average Pool) concern a first sequence of processing layers which implement the creation of at least one feature map. However, other processing layer combinations with more or fewer layers, can form the first sequence of processing layers.

Furthermore, one or all the processing layers are configured to create a feature sub-map for at least one region of a feature sub-map for each region of the image.

The global average pooling layer is followed by a fully connected layer with three neurons as the number of classes are three - that is, a ductile defect, a brittle defect and a fatigue defect. This layer takes the high-level features learned by the convolutional layers and downsampled by the pooling layers and performs the final classification based on the features present in the image. Thus, this layer characterizes the features as being one of a ductile defect, a brittle defect or a fatigue defect. A softmax activation function is then used to convert the output into class probabilities. The defect is characterized by the highest probability.

These processing layers concern a second sequence of processing layers which implement the characterization of the at least one defect of the material based on the feature map. Other processing layer combinations with more layers, can form the second sequence of processing layers.

In some embodiments, dropout layers may be added to reduce the overfitting of the model. As is known in CNNs, the dropout layer identifies a subset of the neurons present in a layer and these are ignored, or nullified, and not passed onto the subsequent layers.

This prevents any single neuron or group of neurons from becoming too specialized on certain features of the training data. In an embodiment the neurons which are dropped are randomly selected, using known techniques. In the AI model described above, a first dropout layer may be added with a probability of 25%, so that during training, each neuron in the previous layer has a 25% chance of being turned off in each forward pass. A second dropout layer may be added with a probability of 50%, so that each neuron in the preceding layer has a 50% chance of being deactivated during training. In particular, one or more dropout layers may be added after convolutional layers within the identity blocks. This introduces a level of randomness during training, making the network more robust and helping to prevent overfitting by avoiding overreliance on specific neurons.

The above described architecture in further embodiments may be altered according to the data processed. For example, the kernel size for each layer, stride length etc., may be different.

Figures 4(a)-(d) illustrate a specific embodiment in which the input image is inputting to an AI model, and each processing layer of the first sequence creates an intermediate image, the created intermediate image being used as an input in the next processing layer. As seen in Figures 4(a)-4(d) each image is generated using different sized filters.

In particular, Figure 4(a) illustrates the intermediate images created by the processing layer Convx_2 described above, based on the input image and 64 filters. Figure 4(b) illustrates the intermediate images created by the processing layer Convx_3 described above, based on the intermediate image created by the previous layer and 128 filters. Figure 4(c) illustrates the intermediate images created by the processing layer Convx_4 described above, based on the intermediate image created by the previous layer and 256 filters. Figure 4(d) illustrates the intermediate images created by the processing layer Convx_5 described above, based on the intermediate image created by the previous layer and 512 filters.

Figures 5(a)-(f) shows an example of images at different channels of Convx_1 and Convx_2 layers for an input image of a fatigue defect. That is, Figures 5(a)-(c) show the images at different channels after being processed at layer Convx_1 and Figures 5(d)-(f) show the images at different channels after being processed at layer Convx_2.

Figures 6(a)-(c) show an example of microscope images (SEM) of brittle defect in a plastic (Figure 6(a)), ductile defect in a metal (Figure 6(b)) and fatigue defect in a metal (Figure 6(c)). As seen in Figure 6(a), the brittle fracture from the plastic material shows the presence of several rivers on plane surface. As seen in Figure 6(b) for the ductile rupture in a metal, there are cup-like features - the figure shows an intergranular ductile rupture and it has deformations at the grain boundaries. As seen in Figure 6(c), the fatigue fracture from the metallic material shows plane surface with parallel fatigue striations.

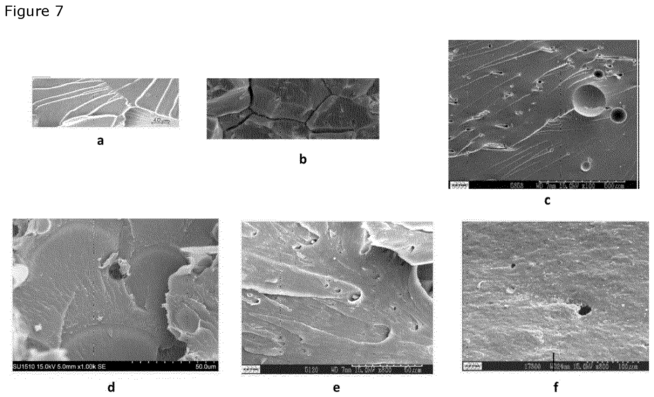

Figures 7(a)-(f) show an example of microscope images of distinct characteristics required to be detected for brittle defect in a surface, for example a metal and plastic surface. For example, Figure 7(a) shows the characteristic "river" on plane surface with "transgranular rupture". Figure 7(b) shows the characteristic "intergranular rupture" with no plastic deformation for metallic material. Figure 7(c) shows the characteristics "rivers" and "talus" on plane surface for plastic material. Figure 7(d) shows the characteristics "concentric arching", "talus" and "rivers" on plane surface. Figure 7(e) shows the characteristics "parabola" and "talus" on plane surface. Figure 7(f) shows the characteristic "taulus" on plane surface. The presence of one or more of these characteristics indicates the presence of a brittle defect.

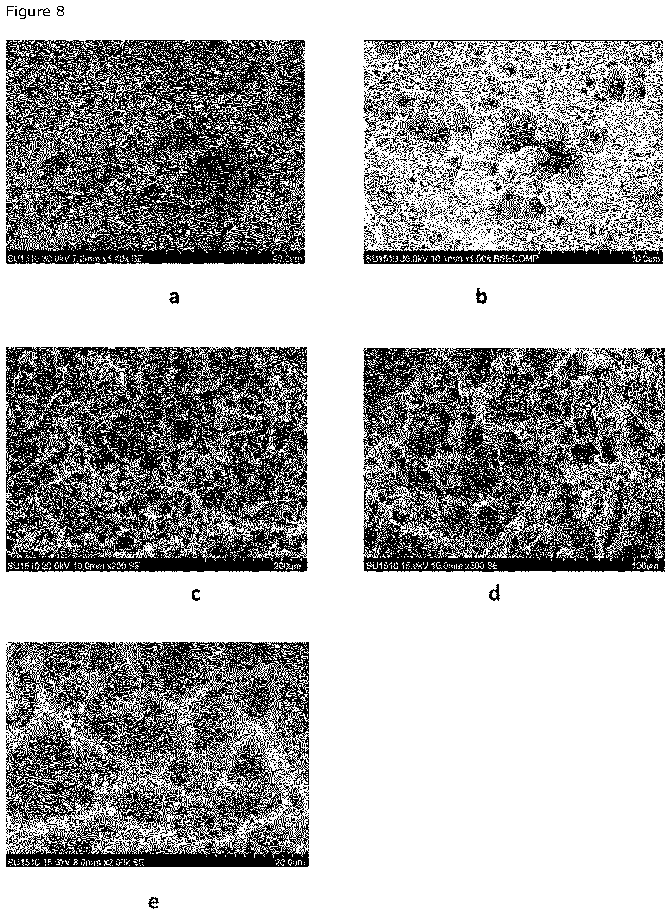

Figures 8(a)-(e) show an example of microscope images of distinct characteristics required to be detected for ductile defect in a surface, for example a metal and plastic surface. Figures 8(a)-(b) show a highly plastically deform surface cup-like features indicating the presence of a ductile rupture in a metallic material. Figures 8(c)-(e) show several elongations of the polymer matrix which is a characteristic indicating the presence of a ductile rupture in a plastic material.

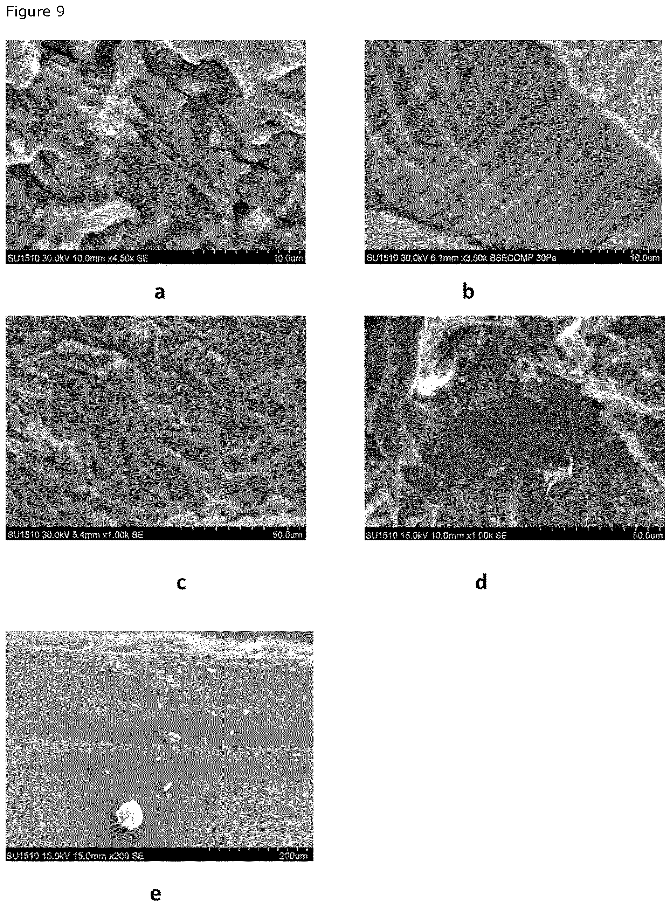

Figures 9(a)-(e) show an example of microscope images of distinct characteristics required to be detected for fatigue defect in a surface, for example a metal and plastic surface. Figures 9(a)-(e) show several fatigue striations and stop lines characteristic for a fatigue rupture in a plastic and metallic material.

The size of the characteristics illustrated in Figures 6, 7, 8 and 9 is, in particular from 1pm to several hundred µms.

With respect to Figures 6, 7, 8 and 9 the visual characteristics of each of the defects are well known and understood in materials.

In some embodiments, instead of images, technical data such as material properties (for example, Young's modulus, tensile strength, fracture toughness, strain at fracture, hardness, Poisson's ratio, impact toughness, yield strength), can be used as input into the AI model. In some other embodiments, both images and technical data can be used as input into the AI model.

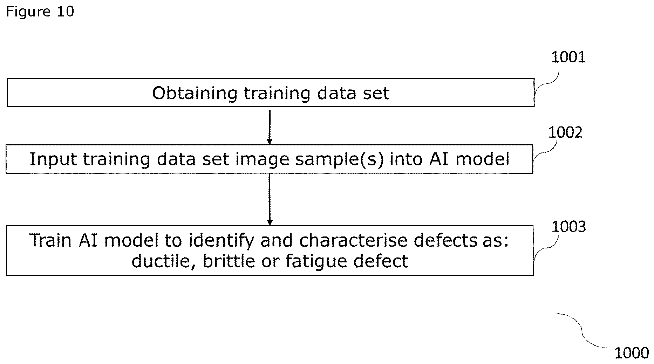

Figure 10 shows a flow-chart of a method, 1000, for training an artificial model for use in identifying and characterizing, one or more defects of a material from an image of the material.

Beneficially, the present invention utilises a supervised machine learning methodology in which the training data is manually labelled by skilled technicians who use their experience and knowledge to classify the various defects detected in an image. The form of each defect has characteristic visual elements which can be used to identify the defect, the training of the model can allow for the systematic detection of such defects in images.

The trained machine learning models can be trained using any suitable dataset specific to the underlying task and training approach specific to the underlying machine learning algorithm used. In one example implementation described below, the machine learning models comprise Resnet models trained on a labelled dataset of image samples in which the defects present in the image sample have been labelled, the label being an information characterizing the defect, i.e., a ductile defect, a brittle defect and a fatigue defect. As part of the training the weight for the layers and neutrons of the layers is determined according to the training data.

In an embodiment, the training data further includes for each image sample the type of material.

In the present example a training dataset comprises a number of image samples showing a variety of different defects. Whilst each type of defect may have certain specific visual characteristics, each type of defect will show variations. Therefore, data sets showing a statistically significant amount of each type of defect are used. In this regard features such as edges, or curves for each defect are not parameterised, rather the above described architecture, with the multiple convolution layers is leveraged to identify, and train, the model, to characterise each type of defect.

Preferably, the models are retrained at regular intervals, when further data is received to improve the accuracy of the model.

In step 1001, training data is obtained where the training data including a plurality of image samples of materials, each image sample comprising an information characterizing a defect on the material present in the image sample - see, for example Figures 6 or Figures 7 or Figures 8 or Figures 9 for example image samples. In an embodiment, input image sizes of 224*224 pixels is found to be sufficiently large to capture the entire defect. Each image sample is labelled with the label defining the type of defect, being one of a ductile defect, a brittle defect and a fatigue defect. Each image sample has only one label, the label being an information characterizing a defect on the material present in the image sample. Preferably, no background class is identified, for each image sample the type of material. The training data may also include for each image sample the type of material, i.e., a metal; a polymer (plastic, elastomer, composite, etc.); a ceramic; or a glass, etc.

The training data set is further augmented using know flipping and rotation techniques. The data set is split into a training dataset and a validation set, using a random selection. In an embodiment 13% of the training data is used for validation, though in further embodiments this value may change.

In step 1002 the image sample is input into an AI model. In one embodiment, the AI model implements a CNN network having a ResNet architecture as described above. As such the model comprises a plurality of processing layers, to process an input image, and generate a feature map as described above with regards to Figure 1.

In some embodiments, before the image sample is inputting to the AI model, the input image may be segmented into a plurality of regions. The segmentation step may consist of a semantic segmentation. Semantic segmentation can be applied on the input images of the training data, where several labels, in particular, information characterizing a defect on the material, are associated with different regions of the image sample.

In step 1003, the AI model is then trained to identify and characterize one or more defects of a material from one or more images of the training data, each of the one or more defects being one of: a ductile defect, a brittle defect and a fatigue defect.

As detailed above with respect to Figure 1, each training image sample is inputted into the AI model. A feature map therefore is created for each image sample which has a known defect, the creation of the feature map being made as detailed above with respect to Figure 1. A characterization of at least one defect of the material is based on the feature map and the information characterizing the defect on the material present in the image sample. The model therefore builds a knowledge of the characteristics of the feature map for each of the defects. As the image sample data is labelled, each type of defect can be identified and characterised. This knowledge is subsequently used in the trained AI model to characterise a new input image. The use of the CNN is therefore particularly beneficially as it is found to be optimal for image pattern recognition.

According to an embodiment of this disclosure, the plurality of processing layers comprises a first sequence of processing layers including at least one processing layer and a second sequence of processing layers including at least one processing layer, the first sequence of processing layers implementing the creation of the feature map, and the second sequence of processing layers implementing the characterization of the at least one defect of the material based on the feature map and the information characterizing a defect on the material present in the image sample. In particular, the second sequence may include at least one fully connected layer, the at least one fully connected layer being configured to perform the step of characterizing a defect of the material based on the feature map and the information characterizing a defect on the material present in the image sample and thus be trained.

In one embodiment, the ResNet model is trained using a cross entropy loss function and using the ADAM optimiser. The training procedure is a supervised procedure. In some embodiments, data augmentation such as flipping and rotating of input images is performed. The learning rate is 0.00001 and the momentum is 0.1. The training process may be performed over 50 epochs with a batch size of dozens or hundreds of labelled images. Approximately 10% of the training data may be used for validation. In further embodiments, other suitable known loss function and optimizers can also be used for training the ResNet model.

After training the ResNet model as described above, a test dataset is used to verify its accuracy. In one embodiment, classification accuracy metrics are used after training to compare an input image of the test data set (i.e., the test dataset) with the output image - that is, the test dataset for validation of the ResNet model comprises a set of labelled images that were not included in the training process. Each image from the test data set is fed to ResNet model, and the output is compared to the actual class label (brittle, ductile or fatigue defect) of the test image. In some embodiments, a confusion matrix, or error matrix, is used to evaluate the accuracy of the model. Such matrixes allow for the accuracy in terms of the Precision, Recall to be determined in a known manner. As discussed above, with reference to the architecture of the CNN, dropout is also used to minimise the overfitting of the model.

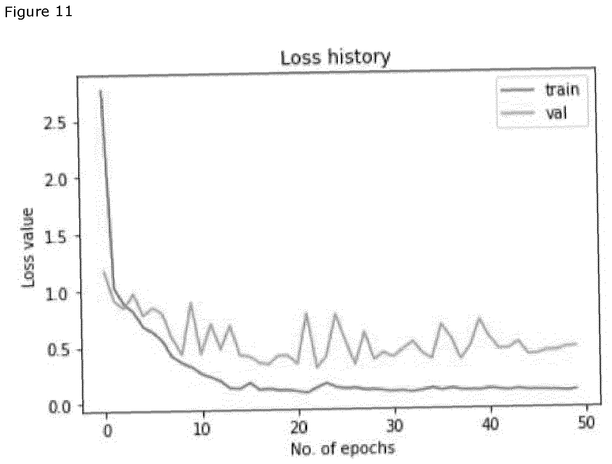

Figure 11 shows the evolution of the loss function relative to the number of epoch for training and for validation of the ResNet model according to an embodiment of this disclosure.

As can be seen in Figure 11 the plot of the loss of the trained model and validation demonstrates that the accuracy of the model is high.

It can be observed in Figure 10 that the training loss is larger than the testing loss. This is an indication that the model is not overfitting the training data and is generalizing well to new data. The fact that the training loss decreases over the course of training, indicates that the model is learning. The testing loss also decreases over the course of training, but at a slower rate than the training loss also indicates that the model is not overfitting.

As illustrated in Figure 11, the training loss starts at a value around 2.7 and decreases to a value around 0.1 over the course of training whereas the testing loss starts at a value around 1.2 and decreases to a value around 0.5 over the course of training.

Finally, the gap between the training loss and testing loss is largest at the beginning of training and decreases as training progresses. Therefore, we can deduce that the model trains well and generalises well to new data.

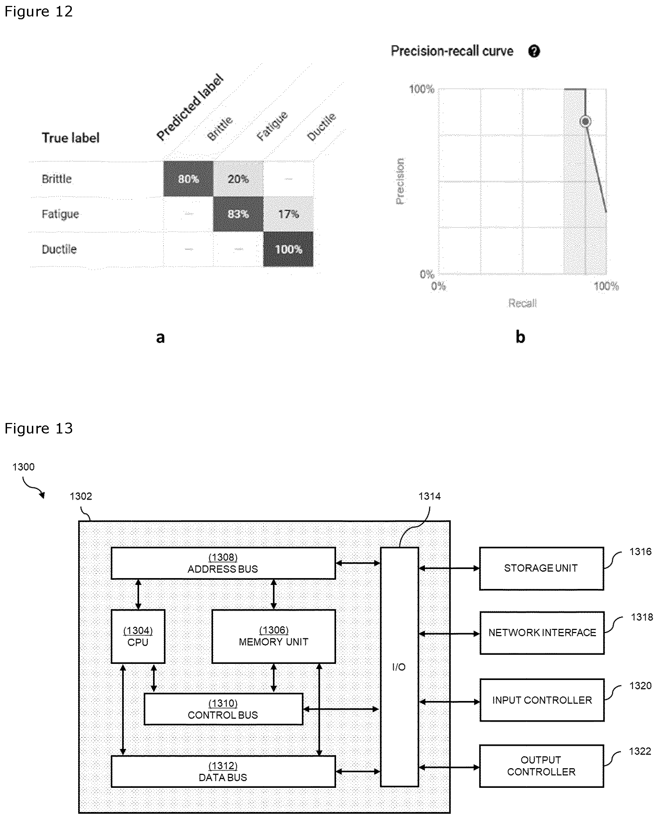

Figures 12(a)-(b) show the precision and recall values for the different types of defects when the ResNet model according to an embodiment of this disclosure was tested with the validation data. In Figures 12(a)-(b), the number of training images was 123 and the number of validation and test images was 16. The precision was found to be 82.4% and recall to be 87.5%.

A device suitable for executing the above-described aspects of the present disclosure is shown in Figure 13. Figure 13 shows a block diagram of an example computing system.

A computing system 1300 can be configured to perform any of the operations disclosed herein. Computing system includes one or more computing device(s) 1302. The one or more computing device(s) 1302 of the computing system 1300 comprise one or more processors 1304 and a memory 1306. The one or more processors 1304 can be any general-purpose processor(s) configured to execute a set of instructions (i.e., a set of executable instructions). For example, the one or more processors 1304 can be one or more general-purpose processors, one or more field programmable gate array (FPGA), and/or one or more application specific integrated circuits (ASIC). In one example, the one or more processors 1304 include one processor. Alternatively, the one or more processors 1304 include a plurality of processors that are operatively connected. The one or more processors 1304 are communicatively coupled to the memory 1306 via an address bus 1308, a control bus 1310, and a data bus 1312. The memory 1306 can be a random-access memory (RAM), a read-only memory (ROM), a persistent storage device such as a hard drive, an erasable programmable read-only memory (EPROM), and/or the like. The one or more computing device(s) 1302 further comprise an I/O interface 1314 communicatively coupled to the address bus 1308, the control bus 1310, and the data bus 1312.

The memory 1306 can store information that can be accessed by the one or more processors 1304. For instance, memory 1306 (e.g., one or more non-transitory computer-readable storage mediums, memory devices) can include computer-readable instructions (not shown) that can be executed by the one or more processors 1304. The computer-readable instructions can be software written in any suitable programming language or can be implemented in hardware. Additionally, or alternatively, the computer-readable instructions can be executed in logically and/or virtually separate threads on the one or more processors 1304. For example, the memory 1306 can store instructions (not shown) that when executed by the one or more processors 1304 cause the one or more processors 1304 to perform operations such as any of the operations and functions for which the computing system 1300 is configured, as described herein. In addition, or alternatively, the memory 1306 can store data (not shown) that can be obtained, received, accessed, written, manipulated, created, and/or stored. The data can include, for instance, the data and/or information described herein in relation to Figures 1 to 12. In some implementations, the computing device(s) 1302 can obtain from and/or store data in one or more memory device(s) that are remote from the computing system 1300.

The computing system 1300 further comprises a storage unit 1316, a network interface 1318, an input controller 1320, and an output controller 1322. The storage unit 1316, the network interface 1318, the input controller 1320, and the output controller 1322 are communicatively coupled to the computing device(s) 1302 via the I/O interface 1314.

The storage unit 1316 is a computer readable medium, preferably a non-transitory computer readable medium or non-transitory machine readable medium, comprising one or more programs, the one or more programs comprising instructions which when executed by the one or more processors 1304 cause the computing system 1300 to perform the method steps of the present disclosure. Alternatively, the storage unit 1316 is a transitory computer readable medium. The storage unit 1316 can be a persistent storage device such as a hard drive, a cloud storage device, or any other appropriate storage device.

The network interface 1318 can be a Wi-Fi module, a network interface card, a Bluetooth module, and/or any other suitable wired or wireless communication device. In one example, the network interface 1318 is configured to connect to a network such as a local area network (LAN), or a wide area network (WAN), the Internet, or an intranet.

Figure 13 illustrates example system 1300 that can be used to implement aspects of the present disclosure. These computing systems are not intended to be limiting and other computing systems, and various modifications of example systems can be used as well. Computing tasks discussed herein can instead be performed remote from the respective system, or vice versa. Such configurations can be implemented without deviating from the scope of the present disclosure. The use of computer-based systems allows for a great variety of possible configurations, combinations, and divisions of tasks and functionality between and among components. Computer-implemented operations can be performed on a single component or across multiple components. Computer-implemented tasks and/or operations can be performed sequentially or in parallel. Data and instructions can be stored in a single memory device or across multiple memory devices.

In some embodiments, the AI model according to above described embodiments in this disclosure can be integrated into hardware such as an imaging modality (e.g. microscope) or tensile stress machine etc. to enable prediction of defects in real time.

It is to be noted that the foregoing description is merely used for enabling the skilled person to understand the present disclosure, without any intention to limit the applicability of the present disclosure to other embodiments which could be readily understood and/or envisaged by the reader.

In the present disclosure, references to items in the singular should be understood to include items in the plural, and vice versa, unless explicitly stated otherwise or clear from the context. Grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth. The use of any and all examples, or exemplary language ("e.g.," "such as," "including," or the like) provided herein, is intended merely to better illuminate the embodiments and does not pose a limitation on the scope of the embodiments or the claims.

The systems and methods of the present disclosure are applicable to any suitable programming language or environment, including but not limited to Java, C, C++, any suitable assembly language, Python, C#, JavaScript, Ruby, PHP, and the like.

Some aspects described herein may relate to a computer storage product with a non-transitory computer-readable medium (also can be referred to as a non-transitory processor-readable medium) having instructions or computer code thereon for performing various computer implemented operations. The computer-readable medium (or processor readable medium) may be non-transitory. The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a transitory computer program product, which can include, for example, the instructions and/or computer code discussed herein.

Some processes/methods described herein can be performed by software (executed on hardware), hardware, or a combination thereof. Hardware modules include, for example, a general-purpose processor, a field programmable gate array (FPGA), and/or an application specific integrated circuit (ASIC). Software modules (executed on hardware) can be expressed in a variety of software languages (e.g., computer code), including C, C++, Java, Ruby, Visual Basic, Python, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, the processes/methods can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

## Claims

1. A computer-implemented method for identifying and characterizing one or more defects of a material from an image of the material, the method comprising:
- obtaining an image of the material,
- inputting the image to an artificial intelligence model, the artificial intelligence model being trained to identify and to characterize in a material a ductile defect, a brittle defect and a fatigue defect,
- the trained artificial intelligence model configured to
∘ create a feature map that identifies the presence of one or more features in the material from the image of the material, and
∘ characterize the one or more features as being one of a ductile defect, a brittle defect or a fatigue defect based on the feature map.

2. The method of claim 1, in which the input of the artificial intelligence model further comprises the type of material, the artificial intelligence model being trained for the type of material, the type of material b one of: a metal; a polymer; a ceramic; or a glass.

3. The method of any of claims 1-2, in which the trained artificial intelligence model comprises a plurality of processing layers which are sequentially executed to create the feature map and/or characterize the one or more features.

4. The method of claim 3, in which the plurality of processing layers comprises at least one convolutional layer.

5. The method of any of claims 3-4, in which the plurality of processing layers comprises at least one pooling layer.

6. The method of any of claims 3-5, in which the plurality of processing layers comprises a first sequence of processing layers including at least one processing layer and a second sequence of processing layers including at least one processing layer, the first sequence of processing layers implementing the creation of the feature map, and the second sequence of processing layers implementing the characterization of the at least one defect of the material based on the feature map.

7. The method of claim 6, in which the first sequence of processing layers including a first processing layer, at least one intermediate processing layer and a final processing layer, wherein the method further comprises:
- the image being inputted in the first processing layer, and the first processing layer configured to create at least one first feature sub-map,
- the at least one first feature sub-map being inputted in an intermediate processing layer, the intermediate processing layer creating at least one intermediate feature sub-map,
- the at least one intermediate feature sub-map being inputted in the final processing layer, the final processing layer creating the feature map.

8. A computer-implemented method for training an artificial intelligence model for use in identifying, and characterizing, one or more defects of a material from an image of the material, the method comprising the step of:
- obtaining training data, the training data including a plurality of image samples of materials, each image sample comprising an information characterizing a defect on the material present in the image sample,
- inputting training data to an artificial intelligence model,
- training the artificial intelligence model to identify and characterize one or more defects of a material from one or more images of the training data, each of the one or more defects being one of: a ductile defect, a brittle defect and a fatigue defect.

9. The method of claim 8, in which the artificial intelligence model to be trained comprises a plurality of processing layers which are sequentially executed to create the feature map.

10. The method of claim 9, in which the plurality of processing layers comprises at least one convolutional layer.

11. The method of any of claims 9-10, in which the plurality of processing layers comprises at least one pooling layer.

12. The method of any of claims 9-11, in which the plurality of processing layers comprises a first sequence of processing layers including at least one processing layer and a second sequence of processing layers including at least one processing layer, the first sequence of processing layers implementing the creation of the feature map, and the second sequence of processing layers implementing the characterization of the at least one defect of the material based on the feature map and the information characterizing a defect on the material present in the image sample.

13. The method of claim 12, in which the first sequence of processing layers including a first processing layer, at least one intermediate processing layer and a final processing layer, wherein the method further comprises, for each image simple:
- the image sample being inputted in the first processing layer, and the first processing layer configured to create at least one first feature sub-map,
- the at least one first feature sub-map being inputted in an intermediate processing layer, the intermediate processing layer creating at least one intermediate feature sub-map,
- the at least one intermediate feature sub-map being inputted in the final processing layer, the final processing layer creating the feature map.

14. The computer-implemented method according to the claims 1-7, wherein the artificial intelligence model has been trained according to the method of any one of claims 8 to 13.

15. A data-processing system comprising means for carrying out the method according to any one of the claims 1-7 or the method according to any one of the claims 8-13.
